# EUROPEAN PATENT APPLICATION

(11) **EP 2 413 181 A1**
(43) Date of publication of application: **01.02.2012**
(21) Application number: 09842174.6
(22) Date of filing: 05.11.2009
(51) Int. Cl.: G02F 1/1368, G02F 1/1343

(54) **TFT SUBSTRATE AND LIQUID CRYSTAL DISPLAY APPARATUS USING THE SAME**

(30) Priority: 24.03.2009 JP 2009072239
(71) Applicant: Sharp Kabushiki Kaisha, Osaka-shi, Osaka 545-8522 (JP)
(72) Inventor: HOSHINO, Atsuyuki, Osaka-shi Osaka 545-8522 (JP)
(74) Representative: Treeby, Philip David William
(86) International application number: PCT/JP2009/005883
(87) International publication number: WO 2010/109558

(57) **Abstract**

The present invention provides a TFT substrate capable of accurately maintaining potentials of pixels on the TFT substrate. The TFT substrate includes gate bus lines (G₂, G₃), auxiliary capacitor bus lines (Cs_{YH3}, Cs_{YL2}), an auxiliary capacitor bus line (Cs_{XH1}) made of the same wiring layer as the gate bus lines (G₂, G₃) and forming an auxiliary capacitor (22) for a first sub-pixel (SP₂₁), and an auxiliary capacitor bus line (Cs_{XL2}) made of the same wiring layer as the gate bus lines (G₂, G₃) and forming an auxiliary capacitor (25) for a second sub-pixel (SP₂₂). The auxiliary capacitor bus line (Cs_{YH3}) is connected with the auxiliary capacitor bus line (Cs_{XH1}), and the auxiliary capacitor bus line (Cs_{YL2}) is connected with the auxiliary capacitor bus line (Cs_{XL2}), via connection wiring portions made of wiring layers different from the gate bus lines (G₂, G₃).

## Description

### Technical Field

The present invention relates to an active matrix TFT substrate and a liquid crystal display apparatus using the TFT substrate.

### Background Art

An example of liquid crystal display apparatuses with improved viewing angle dependency of γ characteristic is a liquid crystal display apparatus based on a multi-pixel drive method. In the multi-pixel drive method, one pixel consists of two or more sub-pixels with different luminances, so as to improve a viewing angle property, i.e., viewing angle dependency of γ characteristic (see Patent Literature 1 for example).

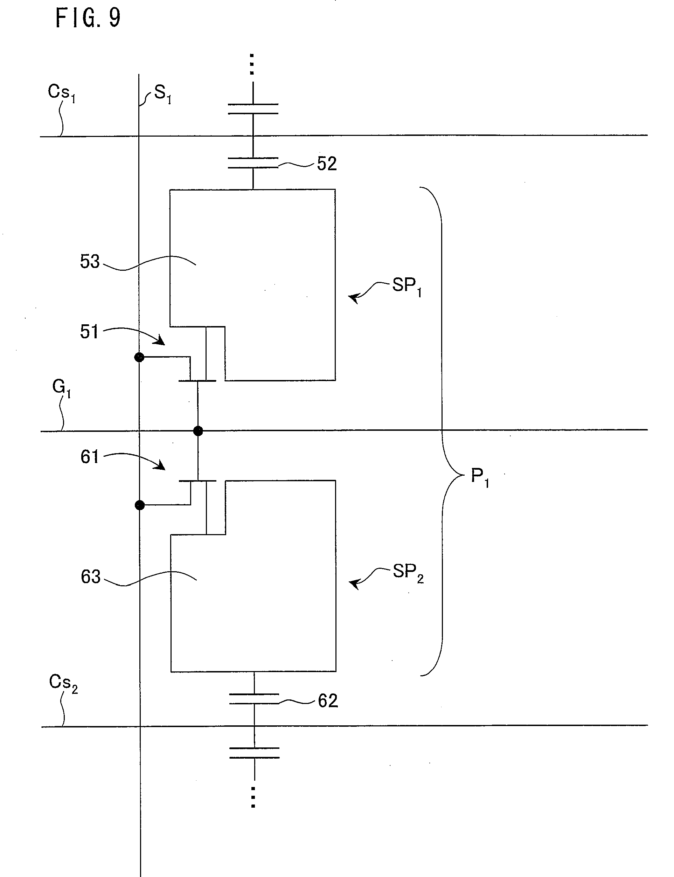

Fig. 9 is an example of a configuration of a pixel included in a conventional liquid crystal display apparatus based on a multi-pixel drive method. As shown in Fig. 9, a pixel P₁ is divided into two sub-pixels SP₁ and SP₂. The sub-pixel SP₁ includes a thin film transistor (hereinafter referred to as "TFT") 51, an auxiliary capacitor 52, and a sub-pixel electrode 53. Similarly, the sub-pixel SP₂ includes a TFT 61, an auxiliary capacitor 62, and a sub-pixel electrode 63.

Gate electrodes of the TFT 51 and the TFT 61 are connected with a gate bus line G₁. Source electrodes of the TFT 51 and the TFT 61 are connected with a source bus line S₁.

The auxiliary capacitor 52 is formed between the sub-pixel electrode 53 and an auxiliary capacitor bus line Cs₁. The auxiliary capacitor 62 is formed between the sub-pixel electrode 63 and an auxiliary capacitor bus line Cs₂.

The auxiliary capacitor bus line Cs₁ and the gate bus line G₁ are positioned to be parallel to each other with the sub-pixel SP₁ therebetween. The auxiliary capacitor bus line Cs₂ and the gate bus line G₁ are positioned to be parallel to each other with the sub-pixel SP₂ therebetween.

The auxiliary capacitor bus line Cs₁ for the pixel P₁ also serves as an auxiliary capacitor bus line which forms an auxiliary capacitor of a sub-pixel of other pixel (not shown) adjacent to the pixel P₁ with the auxiliary capacitor bus line Cs₁ therebetween. Similarly, the auxiliary capacitor bus line Cs₂ for the pixel P₁ also serves as an auxiliary capacitor bus line which forms an auxiliary capacitor of a sub-pixel of other pixel (not shown) adjacent to the pixel P₁ with the auxiliary capacitor bus line Cs₂ therebetween.

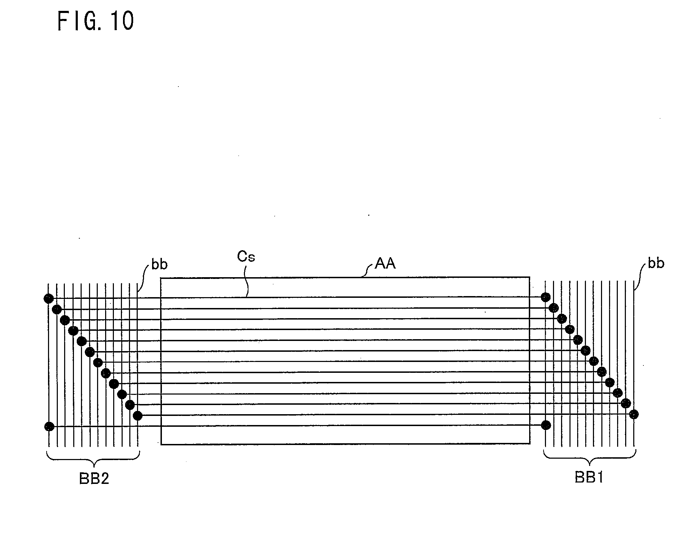

With reference to Fig. 10, the following explains how to drive the auxiliary capacitor bus lines Cs₁ and Cs₂ (which may be hereinafter collectively referred to as "Cs") of a display panel based on the multi-pixel drive method.

As shown in Fig. 10, auxiliary capacitor bus lines Cs positioned alternately on an active area AA serving as a display region are connected respectively with Cs main lines bb which are positioned on areas adjacent to the active area AA. Plural ones of the Cs main lines bb constitute a Cs main line group BB1. Other plural ones of the CS main lines bb constitute a Cs main line group BB2. The Cs main line group BB1 is positioned on an area adjacent to one end of the active area AA which end is a predetermined end of the active area AA in a direction in which the auxiliary capacitor bus line Cs extends. The Cs main line group BB2 is positioned on an area adjacent to the other end of the active area AA which end is a predetermined end of the active area AA in the other direction in which the auxiliary capacitor bus line Cs extends.

For example, in a case where only the Cs main line group BB1 is provided, one ends of the auxiliary capacitor bus lines Cs are connected respectively with the Cs main lines bb constituting the Cs main line group BB1. In contrast thereto, in a case where both the Cs main line group BB 1 and the Cs main line group BB2 are provided, one ends of the auxiliary capacitor bus lines Cs are connected respectively with the Cs main lines bb constituting the Cs main line group BB1 and the other ends of the auxiliary capacitor bus lines Cs are connected with the Cs main lines bb constituting the Cs main line group BB2. The Cs main lines bb extend in a direction perpendicular to a direction in which the auxiliary capacitor bus lines Cs extend, i.e., in a direction in which the source bus line S₁ in Fig. 9 extends.

In Fig. 10, the Cs main line group BB1 consists of 12 Cs main lines bb, and the Cs main line group BB2 consists of 12 Cs main lines bb. Each of the auxiliary capacitor bus lines Cs is connected with one Cs main line bb of the Cs main line group BB1 and with one Cs main line bb of the Cs main line group BB2. 12 auxiliary capacitor bus lines Cs which are positioned serially are connected respectively with different Cs main lines bb of the Cs main line group BB 1 and respectively with different Cs main lines bb of the Cs main line group BB2.

In contrast thereto, in the case where only the Cs main line group BB1 is provided, 12 auxiliary capacitor bus lines Cs which are positioned serially are connected respectively with different Cs main lines bb of the Cs main line group BB1.

In such a multi-pixel drive method, different auxiliary capacitor voltages Vcs are applied to the auxiliary capacitor bus line CS₁ and the auxiliary capacitor bus line CS₂, respectively, so that sub-pixels SP₁ and SP₂ constituting one pixel P₁ have different luminances, thereby improving γ characteristic of the pixel P₁ as a whole.

The auxiliary capacitor voltages Vcs are applied to the auxiliary capacitor bus lines Cs₁ and Cs₂ via the Cs main lines bb, respectively. In each of the Cs main line groups BB1 and BB2, different auxiliary capacitor voltages Vcs are applied to different Cs main lines bb. Accordingly, different auxiliary capacitor voltages Vcs corresponding to the Cs main lines bb, respectively, are supplied from a Cs driver (not shown) to each of the Cs main line groups BB1 and BB2.

As shown in Fig. 10, in a case where the Cs main line groups BB 1 and BB2 are positioned on areas adjacent to the active area AA, respectively, the same auxiliary capacitor voltage Vcs is applied to Cs main lines bb of the Cs main line groups BB 1 and BB2 which Cs main lines bb are connected with the same auxiliary capacitor bus line Cs.

In this manner, the auxiliary capacitor voltage Vcs is applied via both sides of the active area AA. Accordingly, even in a case of a liquid crystal screen of a large size, it is possible to subdue a difference in waveform of the auxiliary capacitor voltage Vcs between different positions of the auxiliary capacitor bus line Cs on the active area AA, which difference is caused by wiring delay of the auxiliary capacitor voltage Vcs.

Conventionally, there has been proposed a configuration in which such auxiliary capacitor bus lines Cs are positioned in a mesh manner in the active area AA (see Patent Literatures 2-6 for example).

For example, in a conventional liquid crystal display apparatus disclosed in Patent Literature 2, storage capacitor bus lines corresponding to the auxiliary capacitor bus lines Cs shown in Fig. 10 are positioned in a mesh manner, so that it is possible to reduce impedance of the storage capacitor bus lines to a greatly small extent with respect to a power source. This enables reducing a time constant of the storage capacitor bus lines, so that the liquid crystal display apparatus can be designed to have a larger size and higher definition without deteriorating display quality.

Also in a conventional liquid crystal display element disclosed in Patent Literature 3, auxiliary capacitor line units corresponding to the auxiliary capacitor bus lines Cs shown in Fig. 10 are positioned in a mesh manner so as to reduce electronic resistance of the auxiliary capacitor units. Further, even if an auxiliary capacitor line unit is broken, the adverse effect of the breakage can be made as small as possible since the auxiliary capacitor lines are positioned in a mesh manner as a whole.

### Citation List

### [Patent Literatures]

[Patent Literature 1]
   International Patent Application Publication No. 2006/098449, pamphlet (published on September 21, 2006)
[Patent Literature 2]
   Japanese Patent Application Publication, Tokukai, No. 2001-281690 (published on October 10, 2001)
[Patent Literature 3]
   Japanese Patent Application Publication, Tokukaihei, No. 9-160075 (published on June 20, 1997)
[Patent Literature 4]
   Japanese Patent Application Publication, Tokukaihei, No. 3-72321 (published on March 27, 1991)
[Patent Literature 5]
   Japanese Patent Application Publication, Tokukaisho, No. 62-265688 (published on November 18, 1987)
[Patent Literature 6]
   Japanese Patent Application Publication, Tokukai, No. 2001-109018 (published on April 20, 2001)

### Summary of Invention

### Technical Problem

In a case of liquid crystal display apparatuses for TV use, the auxiliary capacitor bus lines Cs to maintain pixel potentials are required to have lower resistance in response to requests for double speed drive, larger size, higher-definition etc.

In particular, in the conventional multi-pixel drive method as above, it is necessary to apply different auxiliary capacitor voltages Vcs to the auxiliary capacitor bus line Cs₁ and the auxiliary capacitor bus line Cs₂, respectively. Therefore, it is necessary to design both of the auxiliary capacitor bus lines Cs₁ and Cs₂ to have low resistance.

However, in the case where both of the auxiliary capacitor bus lines Cs₁ and Cs₂ are designed to have lower resistance, the number of pairs of the auxiliary capacitor bus lines must be 2 × n (n is a natural number) since the number of pairs of the auxiliary capacitor bus lines must be at least 2. Consequently, the Cs main line groups BB1 and BB2 shown in Fig. 10 must be designed to have lower resistance, too. This increases the line width of each of the Cs main line groups BB1 and BB2, increasing the area occupied by the Cs main line groups BB1 and BB2.

In view of the above, it is expected to be effective to employ a configuration in which the auxiliary capacitor bus lines Cs are positioned in a mesh manner as disclosed in Patent Literatures 2 and 3.

However, applying the configuration disclosed in Patent Literatures 2 and 3 to the auxiliary capacitor bus lines Cs₁ and Cs₂ to which different auxiliary capacitor voltages Vcs are applied and simply connecting them would make routes of lines used in the connection very complicated.

This forms unnecessary capacitors between the sub-pixel electrode 53 and the auxiliary capacitor bus line Cs₁ and between the sub-pixel electrode 63 and the auxiliary capacitor bus line Cs₂ shown in Fig. 9. This raises a problem that pixel potential of each pixel P₁ cannot be maintained accurately.

In view of the foregoing problem, an object of the present invention is to provide a TFT substrate capable of accurately maintaining pixel potential of a plurality of pixels aligned on the TFT substrate, and a liquid crystal display apparatus using the TFT substrate.

### Solution to Problem

In order to solve the foregoing problems, an active matrix TFT substrate of the present invention is an active matrix TFT substrate, in which a plurality of pixels each consisting of a first sub-pixel and a second sub-pixel adjacent to the first sub-pixel are aligned in a matrix manner, the TFT substrate including: a first gate bus line and a second gate bus line each extending in a direction in which the first sub-pixel and the second sub-pixel are adjacent to each other; a first auxiliary capacitor bus line and a second auxiliary capacitor bus line each made of a same wiring layer as the first gate bus line and the second gate bus line and extending in the direction in which the first sub-pixel and the second sub-pixel are adjacent to each other; a third auxiliary capacitor bus line which is (i) made of a same wiring layer as the first gate bus line and the second gate bus line, (ii) close to the first sub-pixel, and (iii) forms, with a sub-pixel electrode of the first sub-pixel, an auxiliary capacitor for the first sub-pixel; and a fourth auxiliary capacitor bus line which is (i) made of a same wiring layer as the first gate bus line and the second gate bus line, (ii) close to the second sub-pixel, and (iii) forms, with a sub-pixel electrode of the second sub-pixel, an auxiliary capacitor for the second sub-pixel, the first auxiliary capacitor bus line and the first sub-pixel being positioned to have the first gate bus line therebetween, and the second auxiliary capacitor bus line and the second sub-pixel being positioned to have the second gate bus line therebetween, different voltages being applied to the first auxiliary capacitor bus line and the second auxiliary capacitor bus line, the TFT substrate further including: a first connection wiring portion connecting the first auxiliary capacitor bus line and the third auxiliary capacitor bus line, the first connection wiring portion being made of a wiring layer different from the first gate bus line and the second gate bus line; and a second connection wiring portion connecting the second auxiliary capacitor bus line and the fourth auxiliary capacitor bus line, the second connection wiring portion being made of a wiring layer different from the first gate bus line and the second gate bus line.

In the TFT substrate, the first sub-pixel forms an auxiliary capacitor with the third auxiliary capacitor bus line close to the first sub-pixel. The third auxiliary capacitor bus line is connected with the first auxiliary capacitor bus line via the first connection line portion made of a wiring layer different from the first gate bus line and the second gate bus line.

Further, the second sub-pixel forms an auxiliary capacitor with the fourth auxiliary capacitor bus line close to the second sub-pixel. The fourth auxiliary capacitor bus line is connected with the second auxiliary capacitor bus line via the second connection line portion made of a wiring layer different from the first gate bus line and the second gate bus line.

This enables the first auxiliary capacitor bus line and the third auxiliary capacitor bus line to be aligned on the TFT substrate in a mesh manner, and enables the second auxiliary capacitor bus line and the fourth auxiliary capacitor bus line to be aligned on the TFT substrate in a mesh manner.

Accordingly, the same auxiliary capacitor voltage can be evenly supplied to individual pixels on the TFT substrate via the first auxiliary capacitor bus line and the third auxiliary capacitor bus line. Further, the same auxiliary capacitor voltage different from the auxiliary capacitor voltage supplied via the first auxiliary capacitor bus line can be evenly supplied to individual pixels on the TFT substrate via the second auxiliary capacitor bus line and the fourth auxiliary capacitor bus line. This enables accurately maintaining the pixel potentials of individual pixels in multi-image drive using two different voltages.

A liquid crystal display apparatus of the present invention includes: the above TFT substrate; and a control circuit for controlling an image display process of displaying an image using the TFT substrate.

In the liquid crystal display apparatus, the first sub-pixel forms an auxiliary capacitor with the second auxiliary capacitor bus line close to the first sub-pixel. The second auxiliary capacitor bus line is connected with the first auxiliary capacitor bus line via a connection line portion made of a wiring layer different from the gate bus line.

This enables the first auxiliary capacitor bus line and the second auxiliary capacitor bus line to be aligned on the TFT substrate in a mesh manner. Accordingly, the same auxiliary capacitor voltage can be evenly supplied to individual pixels on the TFT substrate via the first auxiliary capacitor bus line and the second auxiliary capacitor bus line, so that the pixel potentials of individual pixels can be maintained accurately.

### Advantageous Effects of Invention

As described above, an active matrix TFT substrate of the present invention is an active matrix TFT substrate, in which a plurality of pixels each consisting of a first sub-pixel and a second sub-pixel adjacent to the first sub-pixel are aligned in a matrix manner, the TFT substrate including: a first gate bus line and a second gate bus line each extending in a direction in which the first sub-pixel and the second sub-pixel are adjacent to each other; a first auxiliary capacitor bus line and a second auxiliary capacitor bus line each made of a same wiring layer as the first gate bus line and the second gate bus line and extending in the direction in which the first sub-pixel and the second sub-pixel are adjacent to each other; a third auxiliary capacitor bus line which is (i) made of a same wiring layer as the first gate bus line and the second gate bus line, (ii) close to the first sub-pixel, and (iii) forms, with a sub-pixel electrode of the first sub-pixel, an auxiliary capacitor for the first sub-pixel; and a fourth auxiliary capacitor bus line which is (i) made of a same wiring layer as the first gate bus line and the second gate bus line, (ii) close to the second sub-pixel, and (iii) forms, with a sub-pixel electrode of the second sub-pixel, an auxiliary capacitor for the second sub-pixel, the first auxiliary capacitor bus line and the first sub-pixel being positioned to have the first gate bus line therebetween, and the second auxiliary capacitor bus line and the second sub-pixel being positioned to have the second gate bus line therebetween, different voltages being applied to the first auxiliary capacitor bus line and the second auxiliary capacitor bus line, the TFT substrate further including: a first connection wiring portion connecting the first auxiliary capacitor bus line and the third auxiliary capacitor bus line, the first connection wiring portion being made of a wiring layer different from the first gate bus line and the second gate bus line; and a second connection wiring portion connecting the second auxiliary capacitor bus line and the fourth auxiliary capacitor bus line, the second connection wiring portion being made of a wiring layer different from the first gate bus line and the second gate bus line.

Accordingly, the present invention can yield an effect of accurately maintaining the pixel potentials of a plurality of pixels on the TFT substrate.

### Brief Description of Drawings

Fig. 1

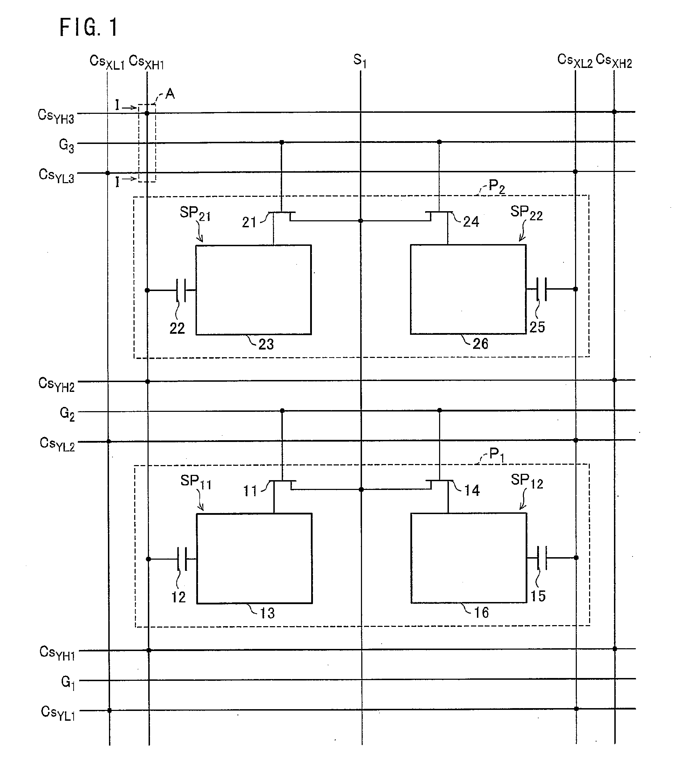

   Fig. 1 is a circuit diagram showing a positional configuration of a plurality of pixels on an active area of a liquid crystal display apparatus in accordance with First Embodiment of the present invention.
Fig. 2

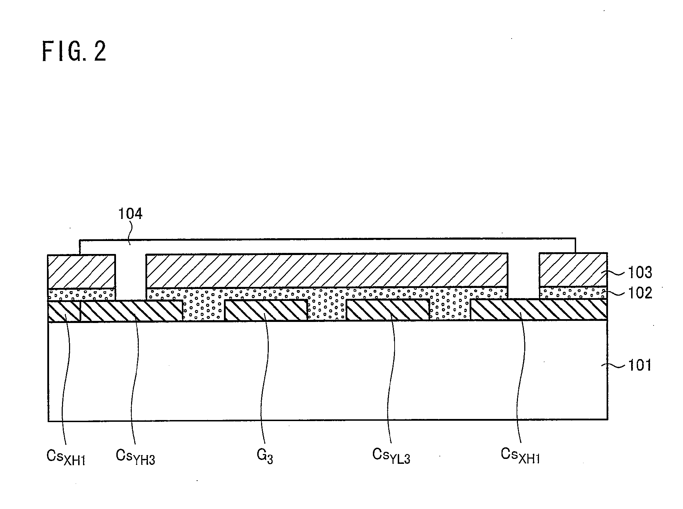

   Fig. 2 is a cross sectional drawing showing a part A in Fig. 1 seen from an I-I direction.
Fig. 3

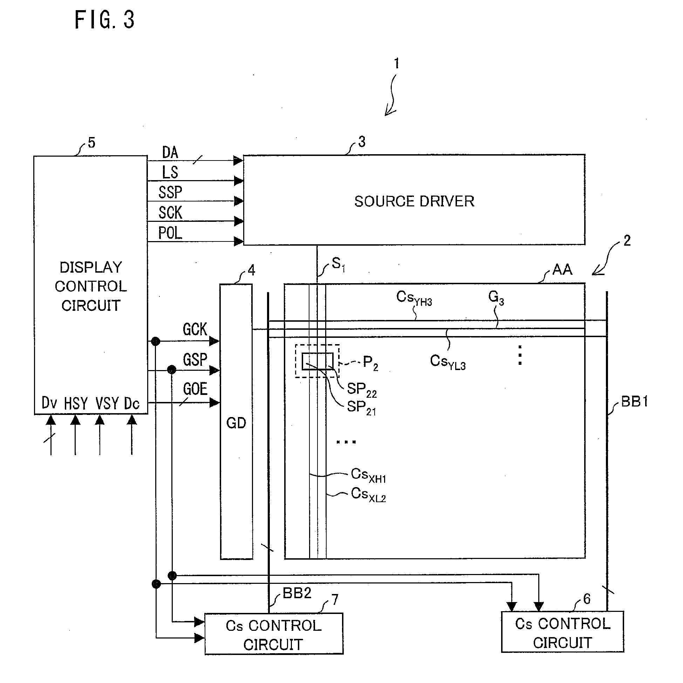

   Fig. 3 is a block diagram showing a configuration of the liquid crystal display apparatus in accordance with First Embodiment of the present invention.
Fig. 4

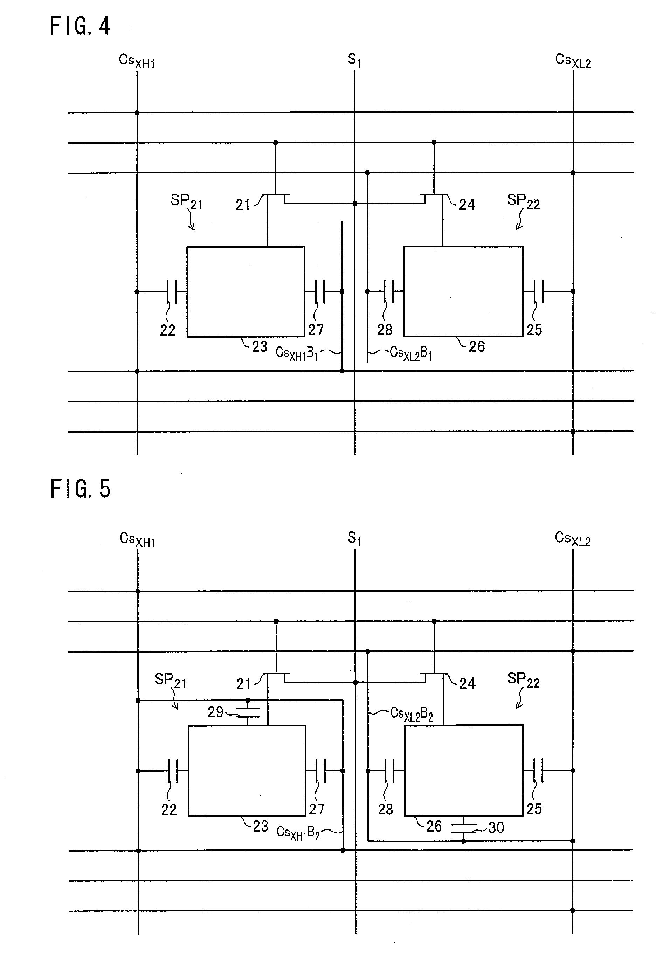

   Fig. 4 is a circuit diagram showing a positional configuration of a plurality of pixels on an active area of a liquid crystal display apparatus in accordance with Second Embodiment of the present invention.
Fig. 5
   Fig. 5 is a circuit diagram showing a positional configuration of a plurality of pixels on an active area of a liquid crystal display apparatus in accordance with Third Embodiment of the present invention.
Fig. 6

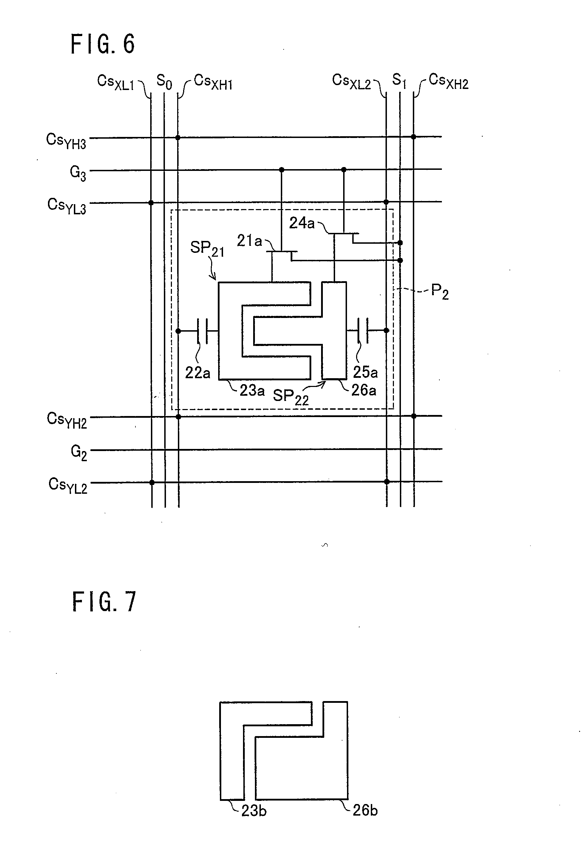

   Fig. 6 is a circuit diagram showing a positional configuration of a plurality of pixels on an active area of a liquid crystal display apparatus in accordance with Fourth Embodiment of the present invention.
Fig. 7
   Fig. 7 is an explanatory drawing explaining a modification example of the shape of sub-pixel electrodes.
Fig. 8

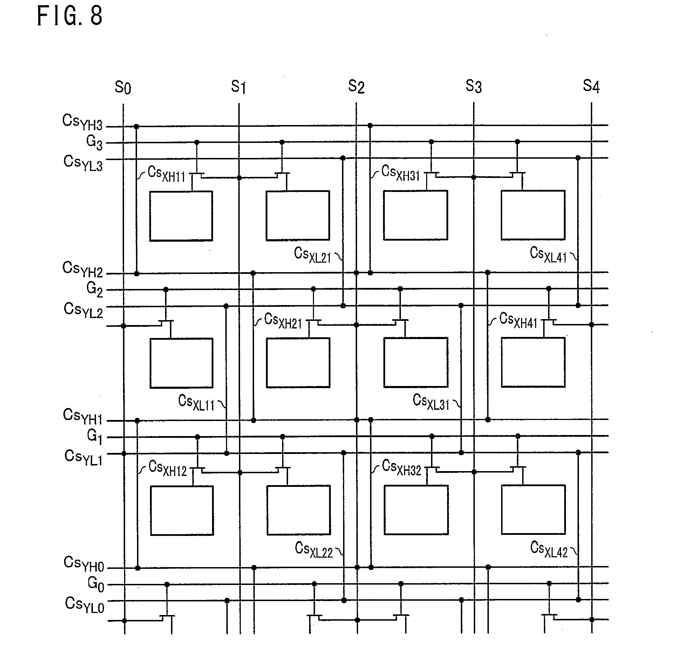

   Fig. 8 is a circuit diagram showing a positional configuration of a plurality of pixels on an active area of a liquid crystal display apparatus in accordance with Fifth Embodiment of the present invention.
Fig. 9
   Fig. 9 is a drawing showing a configuration example of a pixel included in a conventional liquid crystal display apparatus based on a multi-pixel drive method.
Fig. 10
   Fig. 10 is a plane drawing showing positions of auxiliary capacitor bus lines and Cs main lines.

### Description of Embodiments

The following explains embodiments of the present invention with reference to drawings. In the drawings, the same parts or similar parts are given the same reference signs or similar reference signs.

### [First Embodiment]

Fig. 3 is a block diagram showing a configuration of a liquid crystal display apparatus 1 in accordance with First Embodiment of the present invention. As shown in Fig. 3, the liquid crystal display apparatus 1 in accordance with the present embodiment includes an active matrix display section (TFT substrate) 2, a source driver 3, a gate driver (GD) 4, a display control circuit 5, and Cs control circuits 6 and 7.

These components may be mounted on one panel. Alternatively, a part of or all of the source driver 3, the gate driver 4, the display control circuit 5, and the Cs control circuits 6 and 7 may be mounted on an external substrate such as a flexible print substrate and may be connected with a panel including the display section 2. In short, the display section 2, the source driver 3, the gate driver 4, the display control circuit 5, and the Cs control circuits 6 and 7 may be positioned arbitrarily.

The display section 2 includes an active area AA where a plurality of pixels are positioned in a matrix manner, a plurality of gate bus lines, a plurality of source bus lines, a plurality of auxiliary capacitor bus lines, and two Cs main line groups BB 1 and BB2.

In Fig. 3, for easiness of viewing, only a later-mentioned pixel P₂ out of the plurality of pixels on the active area AA is shown, only a gate bus line G₃ out of the plurality of gate bus lines on the active area AA is shown, only a source bus line S₁ out of the plurality of source bus lines on the active area AA is shown, and only auxiliary capacitor bus lines Cs_{YH3}, Cs_{YL3}, Cs_{XH1}, and Cs_{XL2} out of the plurality of auxiliary capacitor bus lines on the active area AA are shown.

The pixel P₂ consists of a sub-pixel SP₂₁ and a sub-pixel SP₂₂. Gate electrodes of TFTs (not shown) included in the sub-pixel SP₂₁ and the sub-pixel SP₂₂, respectively, are connected with the gate bus line G₃. Source electrodes of the TFTs included in the sub-pixel SP₂₁ and the sub-pixel SP₂₂, respectively, are connected with the source bus line S₁. The gate bus lines and the source bus lines are positioned to be perpendicular to each other.

The Cs main line group BB 1 is provided at an area adjacent to one side of the active area AA in a direction in which the auxiliary capacitor bus lines extend. The Cs main line group BB2 is provided at an area adjacent to the other side of the active area AA in a direction in which the auxiliary capacitor bus lines extend. The auxiliary capacitor bus lines are connected with each of the Cs main line group BB 1 and the Cs main line group BB2.

The display control circuit 5 controls the source driver 3, the gate driver 4, the Cs control circuit 6 and the Cs control circuit 7. For example, the display control circuit 5 receives, from an external signal source such as a tuner, a digital video signal Dv indicative of an image to be displayed, a horizontal sync signal HSY and a vertical sync signal VSY each corresponding to the digital video signal Dv, and a control signal Dc for controlling a display operation. Using these signals Dv, HSY, VSY, and Dc thus received, the display control circuit 5 generates a plurality of signals for causing the display section 2 to display an image indicated by the digital video signal Dv, and outputs the plurality of signals. Specifically, as the plurality of signals, the display control circuit 5 generates a data start pulse signal SSP, a data clock signal SCK, a latch strobe signal LS, a digital image signal DA indicative of an image to be displayed (signal corresponding to the video signal Dv), a gate start pulse signal GSP, a gate clock signal GCK, and a gate driver output control signal (scan signal output control signal) GOE.

To be more specific, the display control circuit 5 adjusts timing of the video signal Dv in an internal memory if necessary, and then outputs the adjusted video signal Dv as a digital image signal DA, and generates a data clock signal SCK which is a signal consisting of pulses respectively corresponding to pixels of an image indicated by the digital image signal DA.

The display control circuit 5 generates, based on the horizontal sync signal HSY, the data start pulse signal SSP which has a High level (H level) only during a predetermined period with respect to each horizontal scanning period, and generates, based on the vertical sync signal VSY, the gate start pulse signal GSP which has a H level only during a predetermined period with respect to each one frame period (one vertical scanning period).

The display control circuit 5 generates the gate clock signal GCK based on the horizontal sync signal HSY, and generates the latch strobe signal LS and the gate driver output control signal GOE based on the horizontal sync signal HSY and the control signal Dc.

Among the signals generated by the display control circuit 5 as above, the digital image signal DA, the latch strobe signal LS, a signal POL for controlling the polarity of a signal potential (data signal potential), the data start pulse signal SSP, and the data clock signal SCK are inputted to the source driver 3, and the gate start pulse signal GSP, the gate clock signal GCK, and the gate driver output control signal GOE are inputted to the gate driver 4.

Based on the digital image signal DA, the data clock signal SCK, the latch strobe signal LS, the data start pulse signal SSP, and the polarity inversion signal POL, the source driver 3 serially generates data signals with respect to each horizontal scanning period, and outputs these signals to the source bus lines. These signals are analog potentials corresponding to pixel values of individual pixels which are connected with scanning signal lines and which show an image indicated by the digital image signal DA.

Based on the gate start pulse signal GSP, the gate clock signal GCK, and the gate driver output control signal GOE, the gate driver 4 generates a scanning signal and outputs the scanning signal to the gate bus lines, so as to selectively drive the gate bus lines.

As described above, the source driver 3 and the gate driver 4 drive the source bus lines and the gate bus lines of the display section 2, respectively, so that a signal potential is written into a sub-pixel electrode from a source bus line via a TFT connected with a selected gate bus line.

Thus, a voltage corresponding to the digital image signal DA is applied to a liquid crystal layer of a sub-pixel included in individual pixels, application of the voltage controls transmittance of light from a backlight, and an image indicated by the digital video signal Dv is displayed by the pixels.

The Cs control circuits 6 and 7 are circuits for controlling, based on the gate start pulse signal GSP and the gate clock signal GCK from the display control circuit 5, the phase, cycle etc. of an auxiliary capacitor voltage Vcs for controlling the potential of the auxiliary capacitor bus line. The Cs control circuit 6 outputs the auxiliary capacitor voltage Vcs to the main line group BB1, and the Cs control circuit 7 outputs the auxiliary capacitor voltage Vcs to the Cs main line group BB2.

The following explains a positional configuration of pixels in accordance with First Embodiment of the present invention. Fig. 1 is a circuit diagram showing a positional configuration of a plurality of pixels on the active area AA of the liquid crystal display apparatus 1 shown in Fig. 3.

As shown in Fig. 1, in the active area AA of the liquid crystal display apparatus 1 in accordance with the present embodiment, pixels P₁ and P₂ are provided. The pixel P₁ consists of a sub-pixel SP₁₁ (first sub-pixel) and a sub-pixel SP₁₂ (second sub-pixel). The pixel P₂ consists of a sub-pixel SP₂₁ (first sub-pixel) and a sub-pixel SP₂₂ (second sub-pixel).

Initially, an explanation is made as to the pixel P₁.

The sub-pixel SP₁₁ includes a TFT (thin film transistor) 11, an auxiliary capacitor 12, and a sub-pixel electrode 13. Similarly, the sub-pixel SP₁₂ includes a TFT 14, an auxiliary capacitor 15, and a sub-pixel electrode 16.

A gate electrode of the TFT 11 of the sub-pixel SP₁₁ is connected with a gate bus line G₂ (second gate bus line), and a source electrode of the TFT 11 of the sub-pixel SP₁₁ is connected with a source bus line S₁. Similarly, a gate electrode of the TFT 14 of the sub-pixel SP₁₂ is connected with the gate bus line G₂, and a source electrode of the TFT 14 of the sub-pixel SP₁₂ is connected with the source bus line S₁.

The auxiliary capacitor 12 of the sub-pixel SP₁₁ is formed between the sub-pixel electrode 13 and an auxiliary capacitor bus line Cs_{XH1} (third auxiliary capacitor bus line). The auxiliary capacitor 15 of the sub-pixel SP₁₂ is formed between the sub-pixel electrode 16 and an auxiliary capacitor bus line Cs_{XL2} (fourth auxiliary capacitor bus line).

The sub-pixel SP₁₁ and the sub-pixel SP₁₂ are positioned to be adjacent to each other and to be between the auxiliary capacitor bus line Cs_{XH1} and the auxiliary capacitor bus line Cs_{XL2}. Further, the sub-pixel SP₁₁ is positioned to be closer to the auxiliary capacitor bus line Cs_{XH1} and the sub-pixel SP₁₂ is positioned to be closer to the auxiliary capacitor bus line Cs_{XL2}.

Next, an explanation is made as to the pixel P₂.

The sub-pixel SP₂₁ includes a TFT 21, an auxiliary capacitor 22, and a sub-pixel electrode 23. Similarly, the sub-pixel SP₂₂ includes a TFT 24, an auxiliary capacitor 25, and a sub-pixel electrode 26.

A gate electrode of the TFT 21 of the sub-pixel SP₂₁ is connected with a gate bus line G₃ (first gate bus line), and a source electrode of the TFT 21 of the sub-pixel SP₂₁ is connected with a source bus line S₁. Similarly, a gate electrode of the TFT 24 of the sub-pixel SP₂₂ is connected with the gate bus line G₃, and a source electrode of the TFT 24 of the sub-pixel SP₂₂ is connected with the source bus line S₁.

The auxiliary capacitor 22 of the sub-pixel SP₂₁ is formed between the sub-pixel electrode 23 and the auxiliary capacitor bus line Cs_{XH1}. The auxiliary capacitor 25 of the sub-pixel SP₂₂ is formed between the sub-pixel electrode 26 and the auxiliary capacitor bus line Cs_{XL2}.

The sub-pixel SP₂₁ and the sub-pixel SP₂₂ are positioned to be adjacent to each other and to be between the auxiliary capacitor bus line Cs_{XH1} and the auxiliary capacitor bus line Cs_{XL2}. Further, the sub-pixel SP₁₁ is positioned to be closer to the auxiliary capacitor bus line Cs_{XH1} and the sub-pixel SP₁₂ is positioned to be closer to the auxiliary capacitor bus line Cs_{XL2}.

The auxiliary capacitor bus lines Cs_{XH1} and Cs_{XL2}, an auxiliary capacitor bus line Cs_{XL1} close to the auxiliary capacitor bus line Cs_{XH1}, and an auxiliary capacitor bus line Cs_{XH2} close to the auxiliary capacitor bus line Cs_{XL2} are positioned to be parallel to the source bus line S₁.

On the other hand, the auxiliary capacitor bus lines Cs_{YH1}, Cs_{YH2}, and Cs_{YH3} (first auxiliary capacitor bus line), and the auxiliary capacitor bus lines Cs_{YL1}, Cs_{YL2}, and Cs_{YL3} (second auxiliary capacitor bus line) are positioned to be parallel to the gate bus lines G₁, G₂, and G₃. The gate bus lines G₁, G₂, and G₃ are positioned to be parallel to each other.

The gate bus lines G₁, G₂, and G₃ extend in a direction in which the sub-pixels SP₁₁ and SP₁₂ are adjacent to each other, and in a direction in which the sub-pixels SP₂₁ and SP₂₂ are adjacent to each other. Similarly, the auxiliary capacitor bus lines Cs_{YH1}, Cs_{YH2}, Cs_{YH3}, Cs_{YL1}, Cs_{YL2}, and Cs_{YL3} extend in a direction in which the sub-pixels SP₁₁ and SP₁₂ are adjacent to each other, and in a direction in which the sub-pixels SP₂₁ and SP₂₂ are adjacent to each other.

One ends of the auxiliary capacitor bus lines C_{SYL1}, Cs_{YH1}, Cs_{YL2}, Cs_{YH2}, Cs_{YL3}, and Cs_{YH3} are connected with the Cs main lines bb of the Cs main line group BB₁ shown in Fig. 3. The other ends of the auxiliary capacitor bus lines Cs_{YL1}, Cs_{YH1}, Cs_{YL2}, Cs_{YH2}, Cs_{YL3}, and Cs_{YH3} are connected with the Cs main lines bb of the Cs main line group BB₂ shown in Fig. 3.

The auxiliary capacitor bus line Cs_{XL1} is connected with the auxiliary capacitor bus lines Cs_{YL1}, Cs_{YL2}, and Cs_{YL3}. The auxiliary capacitor bus line Cs_{XH1} is connected with the auxiliary capacitor bus lines Cs_{YH1}, Cs_{YH2}, and Cs_{YH3}. The auxiliary capacitor bus line C_{SXL2} is connected with the auxiliary capacitor bus lines Cs_{YL1}, Cs_{YL2}, and Cs_{YL3}. The auxiliary capacitor bus line Cs_{XH2} is connected with the auxiliary capacitor bus lines Cs_{YH1}, Cs_{YH2}, and Cs_{YH3}.

Since these auxiliary capacitor bus lines are connected with one another as above, the same auxiliary capacitor voltage Vcs is applied to the auxiliary capacitor bus lines Cs_{XL1}, Cs_{XL2}, Cs_{YL1}, Cs_{YL2}, and Cs_{YL3}. Further, the same auxiliary capacitor voltage Vcs is applied to the auxiliary capacitor bus lines Cs_{XH1}, Cs_{XH2}, Cs_{YH1}, Cs_{YH2}, and Cs_{YH3}. That is, these auxiliary capacitor bus lines are positioned on the active area AA in a mesh manner.

Next, an explanation is made as to a connection structure of the auxiliary capacitor bus lines which is required to position the auxiliary capacitor bus lines as above. Fig. 2 is a cross sectional drawing of a part A in Fig. 1 seen from an I-I direction. An explanation is made below with reference to Figs. 1 and 2.

In Fig. 1, the auxiliary capacitor bus lines Cs_{XL1}, Cs_{XL2}, Cs_{YL1}, Cs_{YL2}, Cs_{YL3}, Cs_{XH1}, Cs_{XH2}, Cs_{YH1}, Cs_{YH2}, and Cs_{YH3}, and the gate bus lines G₁, G₂, and G₃ are generally made of the same wiring layer.

Consequently, in the part A in Fig. 1 for example, between the auxiliary capacitor bus lines Cs_{YH3} and Cs_{XH1}, the gate bus line G₃ made of the same material as the auxiliary capacitor bus lines Cs_{YH3} and Cs_{XH1} exists. This makes it impossible to make a conventional connection in which auxiliary capacitor bus lines are merely connected with each other.

In the present embodiment, in order to deal with this problem, in the part A in Fig. 1, the auxiliary capacitor bus lines Cs_{XH1} and Cs_{YH3} are connected with each other via a wiring layer different from a wiring layer which constitutes the gate bus line G₃ and the auxiliary capacitor bus lines Cs_{XH1} and Cs_{YH3}.

That is, in the part A in Fig. 1, the auxiliary capacitor bus lines Cs_{YL3}, Cs_{XH1}, and Cs_{YH3}, and the gate bus line G₃ are provided on a substrate 101 as shown in Fig. 2. An interlayer insulating film 102 and a protective film 103 are provided on the auxiliary capacitor bus lines Cs_{YL3}, Cs_{XH1}, and Cs_{YH3}, and the gate bus line G₃.

An opening is provided in the interlayer insulating film 102 and the protective film 103 on the auxiliary capacitor bus line Cs_{XH1}. Similarly, an opening is provided in the interlayer insulating film 102 and the protective film 103 on the auxiliary capacitor bus line Cs_{YH3}.

A wiring layer (connection wiring section) 104 different from the auxiliary capacitor bus lines Cs_{XH1} and Cs_{YH3} electrically connects the auxiliary capacitor bus lines Cs_{XH1} and Cs_{YH3} via these openings.

Consequently, although the gate bus line G₃ is provided between the auxiliary capacitor bus lines Cs_{XH1} and Cs_{YH3}, the auxiliary capacitor bus lines Cs_{XH1} and Cs_{YH3} are connected with each other by jumping across the gate bus line G₃.

The explanation is made above using the connection structure between the auxiliary capacitor bus lines Cs_{XH1} and Cs_{YH3} in the part A in Fig. 1 as an example. Such a connection structure can be similarly realized in other portions in Fig. 1. That is, there may be similarly realized a connection structure between the auxiliary capacitor bus lines Cs_{YL1} and Cs_{XL1} which are connected by jumping across the gate bus line G₁, a connection structure between the auxiliary capacitor bus lines Cs_{YL2} and Cs_{XL1} which are connected by jumping across the gate bus line G₂, a connection structure between the auxiliary capacitor bus lines Cs_{YL3} and Cs_{XL1} which are connected by jumping across the gate bus line G₃, a connection structure between the auxiliary capacitor bus lines Cs_{YH1} and Cs_{XH1} which are connected by jumping across the gate bus line G₁, a connection structure between the auxiliary capacitor bus lines Cs_{YH2} and Cs_{XH1} which are connected by jumping across the gate bus line G₂, a connection structure between the auxiliary capacitor bus lines Cs_{YL1} and Cs_{XL2} which are connected by jumping across the gate bus line G₁, a connection structure between the auxiliary capacitor bus lines Cs_{YL2} and Cs_{XL2} which are connected by jumping across the gate bus line G₂, a connection structure between the auxiliary capacitor bus lines Cs_{YL3} and Cs_{XL2} which are connected by jumping across the gate bus line G₃, a connection structure between the auxiliary capacitor bus lines Cs_{YH1} and Cs_{XH2} which are connected by jumping across the gate bus line G₁, a connection structure between the auxiliary capacitor bus lines Cs_{YH2} and Cs_{XH2} which are connected by jumping across the gate bus line G₂, and a connection structure between the auxiliary capacitor bus lines Cs_{YH3} and Cs_{XH2} which are connected by jumping across the gate bus line G₃.

As described above, in the liquid crystal display apparatus 1 in accordance with First Embodiment of the present invention, two auxiliary capacitor bus lines are provided between gate bus lines to face each other, and one of the two auxiliary capacitor bus lines is closer to one of the gate bus lines and the other of the two auxiliary capacitor bus lines is closer to the other of the gate bus lines.

The two auxiliary capacitor bus lines are connected with auxiliary capacitor bus lines positioned to be along with edges of sub-pixels to which the two auxiliary capacitor bus lines correspond, respectively.

The auxiliary capacitor bus lines positioned to be along with edges of the sub-pixels are connected with auxiliary capacitor bus lines which are positioned over facing gate bus lines and which have respectively the same potentials.

Consequently, it is possible to position auxiliary capacitor bus lines with two different potentials in a mesh manner. Further, by designing sub-pixel electrodes of two sub-pixels constituting one pixel to be two sub-pixel electrodes which are driven via TFTs positioned symmetrically with a source bus line therebetween, it is possible to prevent formation of unnecessary capacitors.

In the liquid crystal display apparatus 1 in accordance with the present embodiment, an auxiliary capacitor bus line which is parallel to a gate bus line and is made of the same wiring layer (gate layer) as the gate bus line is connected with an adjacent auxiliary capacitor bus line with the same potential in a direction perpendicular to a gate line.

Such a connection is made via a contact hole which is an opening in an interlayer insulating film and a protective film and using a wiring layer on the interlayer insulating film and the protective film.

Consequently, in the liquid crystal display apparatus 1 in accordance with the present embodiment, it is possible to provide a sub-pixel structure in which a pixel electrode is divided into sub-pixel electrodes with a source bus line therebetween, i.e. a structure in which sub-pixels are driven via a common TFT (including two or more TFTs driven with substantially the same timing) and to form capacitors between the sub-pixel electrodes and auxiliary capacitor bus lines with different potentials, respectively. This enables controlling a viewing angle based on capacitive division in which potentials of pixel electrodes are slightly varied from each other.

Using resistance distribution of even auxiliary capacitance bus lines in one pixel region, capacitor between a pixel and an auxiliary capacitor bus line is formed. Therefore, it is unnecessary not only to classify auxiliary capacitor bus lines with respect to each of different potentials, but also to classify auxiliary capacitor bus lines with the same potential into a plurality of groups, which has been required in conventional arts.

Conventionally, the number of Cs main line groups BB₁ and BB₂ to be provided outside a pixel region is required to be equal to the number of groups to which auxiliary capacitor bus lines are classified. However, with the above arrangement, the number of Cs main line groups BB₁ and BB₂ can be at least 2 or 0, so that a space outside the pixel region can be reduced.

### [Second Embodiment]

The following explains Second Embodiment of the present invention.

Fig. 4 is a circuit diagram showing a positional configuration of a plurality of pixels on an active area of a liquid crystal display apparatus in accordance with Second Embodiment of the present invention.

In First Embodiment, the auxiliary capacitor bus lines Cs_{H1} (first branching line portion) and Cs_{XL2} (first branching line portion) positioned close to the sub-pixel electrodes 13, 16, 23, and 26 are close to only one side of the sub-pixel electrodes 13, 16, 23, and 26.

In contrast thereto, in the liquid crystal display apparatus in accordance with Second Embodiment of the present invention, auxiliary capacitor bus lines are positioned at both sides of sub-pixel electrodes having a rectangular shape, i.e. positioned to be close to two sides (first side and second side) of the sub-pixel electrodes. This configuration increases auxiliary capacitances of the sub-pixel electrodes, thereby further stabilizing potentials of sub-pixels.

As shown in Fig. 4, in the liquid crystal display apparatus in accordance with the present embodiment, two auxiliary capacitor bus lines Cs_{XH1}B₁ (second branching line portion) and Cs_{XL2}B₁ (second branching line portion) are newly added.

Consequently, in addition to the configuration of First Embodiment, an auxiliary capacitor 27 for a sub-pixel SP₂₁ is newly formed between a sub-pixel electrode 23 and the auxiliary capacitor bus line Cs_{XH1}B₁.

Further, in addition to the configuration of First Embodiment, an auxiliary capacitor 28 for a sub-pixel SP₂₂ is newly formed between a sub-pixel electrode 26 and the auxiliary capacitor bus line Cs_{XL2}B₁.

### [Third Embodiment]

The following explains Third Embodiment of the present invention.

Fig. 5 is a circuit diagram showing a positional configuration of a plurality of pixels on an active area of a liquid crystal display apparatus in accordance with Third Embodiment of the present invention.

In the liquid crystal display apparatus in accordance with Third Embodiment of the present invention, auxiliary capacitor bus lines are positioned to be close to three sides (first side, second side, and third side) of sub-pixel electrodes having a rectangular shape in such a manner as to surround the sub-pixel electrodes. This configuration further increases auxiliary capacitances of the sub-pixel electrodes, thereby further stabilizing potentials of sub-pixels.

As shown in Fig. 5, in the liquid crystal display apparatus in accordance with the present embodiment, two auxiliary capacitor bus lines Cs_{H1}B₂ (third branching line portion) and Cs_{XL2}B₂ (third branching line portion) are newly added.

Consequently, in addition to the configuration of Second Embodiment, an auxiliary capacitor 29 for a sub-pixel SP₂₁ is newly formed between a sub-pixel electrode 23 and the auxiliary capacitor bus line Cs_{XH1}B₂.

Further, in addition to the configuration of Second Embodiment, an auxiliary capacitor 30 for a sub-pixel SP₂₂ is newly formed between a sub-pixel electrode 26 and the auxiliary capacitor bus line Cs_{XL2}B₂.

### [Fourth Embodiment]

The following explains Fourth Embodiment of the present invention.

Fig. 6 is a circuit diagram showing a positional configuration of a plurality of pixels on an active area of a liquid crystal display apparatus in accordance with Fourth Embodiment of the present invention.

In First to Third Embodiments, sub-pixel electrodes of two sub-pixels constituting each pixel are positioned to face each other with a common source bus line therebetween.

In contrast thereto, in the liquid crystal display apparatus in accordance with Fourth Embodiment of the present invention, sub-pixel electrodes of two sub-pixels constituting each pixel are positioned to be between two source bus lines.

As shown in Fig. 6, a pixel P₂ consists of a sub-pixel SP₂₁ and a sub-pixel SP₂₂. The sub-pixel SP₂₁ includes a TFT21a, an auxiliary capacitor 22a, and a sub-pixel electrode 23a. Similarly, the sub-pixel SP₂₂ includes a TFT24a, an auxiliary capacitor 25a, and a sub-pixel electrode 26a.

A gate electrode of the TFT21a of the sub-pixel SP₂₁ is connected with a gate bus line G₃, and a source electrode of the TFT21a of the sub-pixel SP₂₁ is connected with a source bus line S₁. Similarly, a gate electrode of the TFT24a of the sub-pixel SP₂₂ is connected with a gate bus line G₃, and a source electrode of the TFT24a of the sub-pixel SP₂₂ is connected with a source bus line S₁.

The auxiliary capacitor 22a for the sub-pixel SP₂₁ is formed between the sub-pixel electrode 23a and an auxiliary capacitor bus line C_{SXH1}. The auxiliary capacitor 25a for the sub-pixel SP₂₂ is provided between the sub-pixel electrode 26a and an auxiliary capacitor bus line C_{SXL2}.

The sub-pixel SP₂₁ is positioned to be closer to the auxiliary capacitor bus line C_{SXH1}. The sub-pixel SP₂₂ is positioned to be closer to the auxiliary capacitor bus line C_{SXL2}.

In the present embodiment, one rectangular pixel region of a pixel P₂ is divided into two sub-pixels SP₂₁ and SP₂₂ each dominantly occupying long sides (sides in left-right direction) of the pixel P₂. The sub-pixels SP₂₁ and SP₂₂ are connected with TFTs 21 a and 24a, respectively, both of which are driven by a gate bus line G₃ and a source bus line S₁. The TFTs 21a and 24a may have different sizes.

Auxiliary capacitors are formed between the auxiliary capacitor bus line Cs_{XH1} and the sub-pixel SP₂₁ and between the auxiliary capacitor bus line Cs_{XL2} and the sub-pixel SP₂₂.

The sub-pixel electrodes 23a and 26a shown in Fig. 6 may be replaced with sub-pixel electrodes 23b and 26b having shapes shown in Fig. 7.

### (Fifth Embodiment)

The following explains Fifth Embodiment of the present invention.

Fig. 8 is a circuit diagram showing a positional configuration of a plurality of pixels on an active area of a liquid crystal display apparatus in accordance with Fifth Embodiment of the present invention.

As shown in Fig. 8, in the liquid crystal display apparatus in accordance with the present embodiment, in order to form auxiliary capacitors for individual sub-pixels, there are provided auxiliary capacitor bus lines Cs_{XH11}, Cs_{XH12}, Cs_{XL11}, Cs_{XH21}, Cs_{XL21}, Cs_{XL22}, Cs_{XH31}, Cs_{XH32}, Cs_{XL31}, Cs_{XH41}, Cs_{XL41}, and Cs_{XL42}.

The liquid crystal display apparatuses in accordance with First to Fourth Embodiments employ a stripe pixel arrangement used in displays for personal computers etc.

In contrast thereto, the liquid crystal display apparatus in accordance the present embodiment employs a delta pixel arrangement used for graphic image displays.

The delta pixel arrangement is designed such that a pixel is shifted by 1/2 pitch with respect to each gate bus line (scanning line). Positioning of pixels, auxiliary capacitor bus lines etc. of the delta pixel arrangement are basically the same as those of the stripe pixel arrangement except for the shift of a pixel by 1/2 pitch with respect to each gate bus line.

In general, the delta pixel arrangement has a defect such that since source bus lines extend along edges of pixel electrodes, the length of lines is longer than the length of lines in the stripe pixel arrangement.

However, the delta pixel arrangement of the present embodiment is designed such that two sub-pixels are positioned to have a source bus line therebetween. This configuration is advantageous in that winding of data lines is unnecessary and effective layout can be made.

Further, in general, the delta pixel arrangement can have a larger open area ratio than the stripe pixel arrangement, and therefore very advantageous when used for graphic image displays.

In First to Fifth Embodiments, connection of auxiliary capacitor bus lines may be as follows.

Specifically, a contact hole is provided at a part (e.g. an edge) of an auxiliary capacitor bus line on a TFT substrate, and a conductive pillar spacer (PS) is provided, so as to secure conduction with a counter substrate.

In this case,
(1) A notch is formed in a transparent electrode of the counter electrode, so that a connecting part is independent from other parts.
(2) A line for conduction between auxiliary capacitor bus lines is provided on the transparent electrode of the counter substrate with an additional insulating film formed between the line and the transparent electrode, so as to secure conduction between the pillar spacers for the connection.

The present invention is not limited to the description of the embodiments above, but may be altered by a skilled person within the scope of the claims. An embodiment based on a proper combination of technical means disclosed in different embodiments is encompassed in the technical scope of the present invention.

An active matrix TFT substrate of the present invention is an active matrix TFT substrate, in which a plurality of pixels each consisting of a first sub-pixel and a second sub-pixel adjacent to the first sub-pixel are aligned in a matrix manner, the TFT substrate including: a first gate bus line and a second gate bus line each extending in a direction in which the first sub-pixel and the second sub-pixel are adjacent to each other; a first auxiliary capacitor bus line and a second auxiliary capacitor bus line each made of a same wiring layer as the first gate bus line and the second gate bus line and extending in the direction in which the first sub-pixel and the second sub-pixel are adjacent to each other; a third auxiliary capacitor bus line which is (i) made of a same wiring layer as the first gate bus line and the second gate bus line, (ii) close to the first sub-pixel, and (iii) forms, with a sub-pixel electrode of the first sub-pixel, an auxiliary capacitor for the first sub-pixel; and a fourth auxiliary capacitor bus line which is (i) made of a same wiring layer as the first gate bus line and the second gate bus line, (ii) close to the second sub-pixel, and (iii) forms, with a sub-pixel electrode of the second sub-pixel, an auxiliary capacitor for the second sub-pixel, the first auxiliary capacitor bus line and the first sub-pixel being positioned to have the first gate bus line therebetween, and the second auxiliary capacitor bus line and the second sub-pixel being positioned to have the second gate bus line therebetween, different voltages being applied to the first auxiliary capacitor bus line and the second auxiliary capacitor bus line, the TFT substrate further including: a first connection wiring portion connecting the first auxiliary capacitor bus line and the third auxiliary capacitor bus line, the first connection wiring portion being made of a wiring layer different from the first gate bus line and the second gate bus line; and a second connection wiring portion connecting the second auxiliary capacitor bus line and the fourth auxiliary capacitor bus line, the second connection wiring portion being made of a wiring layer different from the first gate bus line and the second gate bus line.

In the TFT substrate, the first sub-pixel forms an auxiliary capacitor with the third auxiliary capacitor bus line close to the first sub-pixel. The third auxiliary capacitor bus line is connected with the first auxiliary capacitor bus line via the first connection line portion made of a wiring layer different from the first gate bus line and the second gate bus line.

Further, the second sub-pixel forms an auxiliary capacitor with the fourth auxiliary capacitor bus line close to the second sub-pixel. The fourth auxiliary capacitor bus line is connected with the second auxiliary capacitor bus line via the second connection line portion made of a wiring layer different from the first gate bus line and the second gate bus line.

This enables the first auxiliary capacitor bus line and the third auxiliary capacitor bus line to be aligned on the TFT substrate in a mesh manner, and enables the second auxiliary capacitor bus line and the fourth auxiliary capacitor bus line to be aligned on the TFT substrate in a mesh manner.

Accordingly, the same auxiliary capacitor voltage can be evenly supplied to individual pixels on the TFT substrate via the first auxiliary capacitor bus line and the third auxiliary capacitor bus line. Further, the same auxiliary capacitor voltage different from the auxiliary capacitor voltage supplied via the first auxiliary capacitor bus line can be evenly supplied to individual pixels on the TFT substrate via the second auxiliary capacitor bus line and the fourth auxiliary capacitor bus line. This enables accurately maintaining the pixel potentials of individual pixels in multi-image drive using two different voltages.

It is preferable to arrange the TFT substrate of the present invention such that the first connection wiring portion is made of a same wiring layer as the sub-pixel electrode of the first sub-pixel, and the second connection wiring portion is made of a same wiring layer as the sub-pixel electrode of the second sub-pixel.

In this case, a wiring structure of the TFT substrate can be simplified, so that the cost for manufacturing the TFT substrate can be reduced.

It is preferable to arrange the TFT substrate of the present invention such that the first sub-pixel has a rectangular shape and has a first side and a second side opposite to the first side, the first side and the second side being along the third auxiliary capacitor bus line, and the third auxiliary capacitor bus line including a first branching line portion closer to the first side of the first sub-pixel and a second branching line portion closer to the second side of the first sub-pixel.

In this case, two auxiliary capacitors, i.e., an auxiliary capacitor using the first branching line portion and an auxiliary capacitor using the second branching line portion are formed with respect to each of two sub-pixels, so that the pixel potential of a pixel consisting of the two sub-pixels can be maintained accurately.

It is preferable to arrange the TFT substrate of the present invention such that the first sub-pixel further having a third side positioned between the first side and the second side and facing the first gate bus line, and the third auxiliary capacitor bus line further including a third branching line portion closer to the third side of the first sub-pixel.

In this case, three auxiliary capacitors, i.e., an auxiliary capacitor using the first branching line portion, an auxiliary capacitor using the second branching line portion, and an auxiliary capacitor using the third branching line portion are formed with respect to each of two sub-pixels, so that the pixel potential of a pixel consisting of the two sub-pixels can be maintained more accurately.

It is preferable to arrange the TFT substrate of the present invention so as to further include a source bus line crossing the first gate bus line and the second gate bus line, the first sub-pixel and the second sub-pixel being positioned to face each other with the source bus line therebetween.

In this case, the first sub-pixel and the second sub-pixel are positioned to face each other with the source bus line therebetween, i.e. positioned substantially symmetrically with respect to a point on the source bus line. Further, two pixels each consisting of the first sub-pixel and the second sub-pixel are positioned to face each other with the third auxiliary capacitor bus line or the fourth auxiliary capacitor bus line therebetween. Accordingly, it is possible to efficiently align a plurality of pixels, thereby reducing the area occupied by the plurality of pixels.

It is preferable to arrange the TFT substrate of the present invention such that the first connection wiring portion is made of a same wiring layer as the sub-pixel electrode of the first sub-pixel and the source bus line, and the second connection wiring portion is made of a same wiring layer as the sub-pixel electrode of the second sub-pixel and the source bus line.

In this case, a wiring structure of the TFT substrate can be simplified, so that the cost for manufacturing the TFT substrate can be reduced.

It is preferable to arrange the TFT substrate of the present invention so as to further include adjacent two source bus lines crossing the first gate bus line and the second gate bus line, the first sub-pixel and the second sub-pixel being positioned between the adjacent two bus lines, and being connected with one of the adjacent two bus lines.

In this case, a wiring structure of the TFT substrate can be simplified, so that the cost for manufacturing the TFT substrate can be reduced.

It is preferable to arrange the TFT substrate of the present invention such that the plurality of pixels are aligned in a stripe pixel arrangement.

In this case, the visibility of a character displayed by a plurality of pixels can be improved.

It is preferable to arrange the TFT substrate of the present invention such that the plurality of pixels are aligned in a delta pixel arrangement.

In this case, an open area ratio (light transmittancy, light utilization ratio) of each pixel can be improved.

A liquid crystal display apparatus of the present invention includes: the above TFT substrate; and a control circuit for controlling an image display process of displaying an image using the TFT substrate.

In the liquid crystal display apparatus, the first sub-pixel forms an auxiliary capacitor with the second auxiliary capacitor bus line close to the first sub-pixel. The second auxiliary capacitor bus line is connected with the first auxiliary capacitor bus line via a connection line portion made of a wiring layer different from the gate bus line.

This enables the first auxiliary capacitor bus line and the second auxiliary capacitor bus line to be aligned on the TFT substrate in a mesh manner. Accordingly, the same auxiliary capacitor voltage can be evenly supplied to individual pixels on the TFT substrate via the first auxiliary capacitor bus line and the second auxiliary capacitor bus line, so that the pixel potentials of individual pixels can be maintained accurately.

### Industrial Applicability

The present invention is applicable to various display apparatuses such as monitors for personal computers and television receivers.

### Reference Signs List

1: Liquid crystal display apparatus
2: Display section (TFT substrate)
3: Source driver
4: Gate driver
5: Display control circuit
6, 7: Cs control circuit
11, 14, 21, 21a, 24, 24a, 51, 61: TFT (thin film transistor)
12, 15, 22, 22a, 25, 25a, 27, 28, 29, 30, 52, 62: Auxiliary capacitor
13, 16, 23, 23a, 23b, 26, 26a, 26b, 53, 63: Sub-pixel electrode
101: Substrate
102: Interlayer insulating film
103: Protective layer
104: Wiring layer (first connection wiring portion, second connection wiring portion)
Cs_{YH1}, Cs_{YH2}, Cs_{YH3}: Auxiliary capacitor bus line (first auxiliary capacitor bus line)
Cs_{YL1}, Cs_{YL2}, Cs_{YL3}: Auxiliary capacitor bus line (second auxiliary capacitor bus line)
Cs_{XH1}, Cs_{XH2}: Auxiliary capacitor bus line (third auxiliary capacitor bus line)
Cs_{XL1}, Cs_{XL2}: Auxiliary capacitor bus line (fourth auxiliary capacitor bus line)
S₁: Source bus line

## Claims

1. An active matrix TFT substrate, in which a plurality of pixels each consisting of a first sub-pixel and a second sub-pixel adjacent to the first sub-pixel are aligned in a matrix manner,
the TFT substrate comprising:
a first gate bus line and a second gate bus line each extending in a direction in which the first sub-pixel and the second sub-pixel are adjacent to each other;
a first auxiliary capacitor bus line and a second auxiliary capacitor bus line each made of a same wiring layer as the first gate bus line and the second gate bus line and extending in the direction in which the first sub-pixel and the second sub-pixel are adjacent to each other;
a third auxiliary capacitor bus line which is (i) made of a same wiring layer as the first gate bus line and the second gate bus line, (ii) close to the first sub-pixel, and (iii) forms, with a sub-pixel electrode of the first sub-pixel, an auxiliary capacitor for the first sub-pixel; and
a fourth auxiliary capacitor bus line which is (i) made of a same wiring layer as the first gate bus line and the second gate bus line, (ii) close to the second sub-pixel, and (iii) forms, with a sub-pixel electrode of the second sub-pixel, an auxiliary capacitor for the second sub-pixel,
the first auxiliary capacitor bus line and the first sub-pixel being positioned to have the first gate bus line therebetween, and the second auxiliary capacitor bus line and the second sub-pixel being positioned to have the second gate bus line therebetween,
different voltages being applied to the first auxiliary capacitor bus line and the second auxiliary capacitor bus line,
the TFT substrate further comprising:
a first connection wiring portion connecting the first auxiliary capacitor bus line and the third auxiliary capacitor bus line, the first connection wiring portion being made of a wiring layer different from the first gate bus line and the second gate bus line; and
a second connection wiring portion connecting the second auxiliary capacitor bus line and the fourth auxiliary capacitor bus line, the second connection wiring portion being made of a wiring layer different from the first gate bus line and the second gate bus line.

2. The TFT substrate as set forth in claim 1, wherein the first connection wiring portion is made of a same wiring layer as the sub-pixel electrode of the first sub-pixel, and the second connection wiring portion is made of a same wiring layer as the sub-pixel electrode of the second sub-pixel.

3. The TFT substrate as set forth in claim 1 or 2, wherein
the first sub-pixel has a rectangular shape and has a first side and a second side opposite to the first side, the first side and the second side being along the third auxiliary capacitor bus line, and
the third auxiliary capacitor bus line including a first branching line portion closer to the first side of the first sub-pixel and a second branching line portion closer to the second side of the first sub-pixel.

4. The TFT substrate as set forth in claim 3, wherein
the first sub-pixel further having a third side positioned between the first side and the second side and facing the first gate bus line, and
the third auxiliary capacitor bus line further including a third branching line portion closer to the third side of the first sub-pixel.

5. The TFT substrate as set forth in any one of claims 1-4, further comprising a source bus line crossing the first gate bus line and the second gate bus line,
the first sub-pixel and the second sub-pixel being positioned to face each other with the source bus line therebetween.

6. The TFT substrate as set forth in claim 5, wherein
the first connection wiring portion is made of a same wiring layer as the sub-pixel electrode of the first sub-pixel and the source bus line, and
the second connection wiring portion is made of a same wiring layer as the sub-pixel electrode of the second sub-pixel and the source bus line.

7. The TFT substrate as set forth in any one of claims 1-4, further comprising adjacent two source bus lines crossing the first gate bus line and the second gate bus line,
the first sub-pixel and the second sub-pixel being positioned between the adjacent two bus lines, and being connected with one of the adjacent two bus lines.

8. The TFT substrate as set forth in any one of claims 1-7, wherein the plurality of pixels are aligned in a stripe pixel arrangement.

9. The TFT substrate as set forth in any one of claims 1-7, wherein the plurality of pixels are aligned in a delta pixel arrangement.

10. A liquid crystal display apparatus, comprising:
a TFT substrate as set forth in any one of claims 1-9; and
a control circuit for controlling an image display process of displaying an image using the TFT substrate.
